# EUROPÄISCHE PATENTANMELDUNG

(11) **EP 3 363 687 A1**
(43) Veröffentlichungstag der Anmeldung: **22.08.2018**
(21) Anmeldenummer: 17001366.8
(22) Anmeldetag: 10.08.2017
(51) Int. Cl.: B60R 13/01

(54) **VORRICHTUNG ZUM SCHUTZ DES LADEBEREICHS VON AUTOMOBILEN**

(30) Priorität: 17.02.2017 DE 102017001539
(71) Anmelder: Carbox GmbH & Co. KG, 28832 Achim (DE)
(72) Erfinder: Kögler, Joachim, 27616 Beverstedt (DE); Lasthaus, Peter, 26452 Sande (DE); Bellinger, Stefan, 28209 Bremen (DE)
(74) Vertreter: Möller, Friedrich

(57) **Zusammenfassung**

Zum Schutz des Ladebereichs (23) von Automobilen wird ein Laderaumschutz (10) verwendet. Bekannte Laderaumschutze (23) liegen lose in dem Ladebereich (23), was zu einem ungewollten Verrutschen des Laderaumschutzes (10) führen kann. Darüber hinaus wird oftmals als Rutschschutz oder Schutz gegen Schmutz eine weitere Einlage (12) verwendet, die ebenfalls verrutschen kann. Bekannte Fixierungen sind aufwendig in ihrer Handhabung. Die Erfindung schafft eine Vorrichtung zum Schutz des Ladebereichs (23), die auf eine einfache Art und Weise handhabbar ist. Das wird dadurch erreicht, dass der Laderaumschutz (10) mindestens ein Verbindungselement (16) mit zwei Verbindungsmitteln (17, 18) aufweist.

## Beschreibung

Die Erfindung betrifft eine Vorrichtung zum Schutz des Ladebereichs von Automobilen gemäß dem Oberbegriff des Anspruchs 1.

Es ist bekannt, den Ladebereich von Automobilen, und zwar Limousinen, Kombis, Vans, SUVs und dergleichen durch Verwendung eines Laderaumschutzes zu schützen. Hierbei kann es sich um eine mindestens über den größten Teil des im Heckbereich des Automobils vorhandenen Laderaumbodens erstreckende randlose Matte oder um eine einen Rand, vorzugsweise einen niedrigen Rand, aufweisende wannenähnliche Auskleidung handeln.

Die bekannten Laderaumschutze liegen lose auf dem Laderaumboden des Automobils. Insbesondere, wenn der Laderaumschutz nicht mit dem Ladebereich passgenau ist, kann es zu einem ungewollten Verrutschen des Laderaumschutzes kommen. Darüber hinaus wird oftmals als Rutschschutz auf dem Laderaumschutz eine weitere Einlage gelegt, um Objekte im Laderaumschutz gegen Verrutschen zu sichern. Auch diese beispielsweise mattenartigen Einlagen können relativ zu dem Laderaumschutz verrutschen.

Um ein Verrutschen des Laderaumschutzes relativ zum Laderaumboden und der Einlage relativ zum Laderaumschutz zu vermeiden, ist es bekannt den Laderaumschutz an dem Laderaumboden sowie die Einlage an dem Laderaumschutz zu fixieren. Derartige Fixierungen sind jedoch aufwendig in ihrer Handhabung und Herstellung.

Der Erfindung liegt nun die Aufgabe zugrunde, eine Vorrichtung zum Schutz des Ladebereichs von Automobilen zu schaffen, die auf eine einfache Art und Weise handhabbar und herstellbar ist.

Eine Vorrichtung zur Lösung dieser Aufgabe weist die Merkmale des Anspruchs 1 auf. Demnach ist es vorgesehen, dass der Laderaumschutz mindestens ein Verbindungselement mit zwei Verbindungsmitteln aufweist. Dadurch, dass das mindestens eine Verbindungselement der Vorrichtung, insbesondere des Laderaumschutzes, zwei Verbindungsmittel aufweist, dient es zugleich zur Fixierung der Einlage im oder auf dem Laderaumschutz und zur Fixierung des Laderaumschutzes auf dem Laderaumboden. Dadurch vereinfacht sich die Handhabung und Fixierung der Vorrichtung.

Insbesondere kann es die vorliegende Erfindung weiter vorsehen, dass das Verbindungselement ein erstes Verbindungsmittel und ein zweites Verbindungsmittel aufweist, die zusammenhängend als vorzugsweise eine Einheit ausgebildet sind. Vorzugsweise ist das erste Verbindungsmittel einer Unterseite des Laderaumschutzes und das zweite Verbindungsmittel einer Oberseite des Laderaumschutzes zugeordnet. Durch diese Zuordnung der Verbindungsmittel kann der Laderaumschutz Verbindungen eingehen sowohl zum Laderaumboden als auch zur sich auf oder in dem Laderaumschutz befindenden Einlage, Matte oder dergleichen. Somit kann durch das jeweilige bzw. eine Verbindungselement eine beidseitige Verbindung des Laderaumschutzes hergestellt werden. Durch diese Anordnung lässt sich sowohl der Laderaumschutz relativ zu dem Laderaumboden sichern als auch relativ zur Matte oder dergleichen auf dem oder in dem Laderaumschutz.

Bevorzugt kann es des Weiteren vorgesehen sein, dass das erste und das zweite Verbindungsmittel unterschiedlich ausgebildet sind. So kann zum Beispiel eines der Verbindungsmittel als Haftverbindung und das andere Verbindungsmittel als Schnappverbindung ausgebildet sein. Je nachdem welche Anforderungen die Verbindung zwischen dem ersten Verbindungsmittel bzw. dem zweiten Verbindungsmittel mit einer entsprechenden Gegenstelle stellt, können diese Verbindungsmittel unterschiedlich ausgebildet sein. So erscheint eine Haftverbindung zwischen dem Laderaumschutz und dem Laderaumboden als besonderes geeignet, da für eine entsprechende Verbindung der Laderaumschutz lediglich in den Ladebereich gelegt werden muss, damit die Haftverbindung in Kraft tritt. Alternativ können auch beide Verbindungsmittel als Haftverbindung oder als Schnappverbindung ausgebildet sein.

Eine weitere vorteilhafte Ausgestaltung der vorliegenden Erfindung kann es vorsehen, dass das erste Verbindungsmittel als Klettverschlussverbindung, insbesondere als Mikrohakenstruktur, ausgebildet ist, die einer korrespondierenden Klettverschlussverbindung auf dem Ladebereich zuordbar ist und das zweite Verbindungsmittel als Druckknopfelement ausgebildet ist, das einem korrespondierenden Druckknopfelement einer Einlage, vorzugsweise einer Matte, zuordbar ist. Alternativ ist es auch denkbar, dass es sich bei dem ersten und/oder zweiten Verbindungsmittel um eine Formschluss- oder eine Kraftschlussverbindung handelt. Darüber hinaus ist es auch denkbar, dass es sich bei mindestens einem Verbindungsmittel um eine andersartige mechanisch oder z. B. auch magnetisch wirkende Verbindung handelt. Wesentlich ist es, dass die Verbindungen auf eine einfache Art und Weise und ohne großen Kraftaufwand herstellbar bzw. lösbar sind, sodass eine Handhabung, insbesondere eine einhändige Handhabung, möglich ist.

Eine bevorzugte Weiterbildung der vorliegenden Erfindung kann es vorsehen, dass die Einlage bzw. Matte wenigstens größtenteils, insbesondere ausschließlich, innerhalb des, vorzugsweise wannenartigen, Laderaumschutzes angeordnet ist. Bei dieser Einlage kann es sich somit beispielsweise um eine Matte handeln, welche einen Rutschschutz oder Schutz gegen Beschädigungen bietet und durch die Verbindungsmittel sowohl lösbar mit dem Laderaumschutz als auch in dem Ladebereich des Automobils fixierbar ist.

Vorzugsweise kann es außerdem vorgesehen sein, dass der Laderaumschutz zwei Verbindungselemente aufweist, die einem in Fahrtrichtung des Automobils betrachtet hinteren Bereichs des Laderaumschutzes zugeordnet sind, vorzugsweise dass dem Laderaumschutz zwei bevorzugt gleiche Verbindungselemente in zwei hinteren Eckbereichen des Laderaumschutzes zugeordnet sind. Durch die Positionierung der Verbindungselemente im Heckbereich des Ladebereichs kann die Vorrichtung durch eine Bedienperson auf eine einfache Art und Weise gehandhabt werden. Die Verbindungselemente sind einfach von der vor dem Ladebereich stehenden Person handhabbar, d. h. zu befestigen und zu lösen. Außerdem kann so die dem Laderaumschutz zugeordnete Einlage bzw. Matte nach hinten über eine Laderaumkante umgeklappt werden zum Schutz derselben beim Be- und Entladen.

Weiter kann es vorgesehen sein, dass die Verbindungsmittel jeweils wenigstens nahezu in der gleichen Ebene liegen wie die Oberseite und die Unterseite des Laderaumschutzes und/oder das erste Verbindungsmittel und das zweite Verbindungsmittel miteinander verbunden sind. Somit sind das erste und das zweite Verbindungsmittel zusammenhängend ausgebildet, wobei ein Verbindungsmittel der Oberseite und das andere Verbindungsmittel der Unterseite des Laderaumschutzes zugeordnet ist. Diese Zuordnung ist insbesondere für die Herstellung des jeweiligen Verbindungselementes besonders vorteilhaft.

Bevorzugt ist den Verbindungsmitteln des jeweiligen Verbindungselements ein gemeinsamer Verbinder zugeordnet, der sich durch einen vorzugsweise einzigen gemeinsamen Durchbruch im Laderaumschutz, insbesondere einer Bodenwandung desselben, erstreckt. Zur Verbindung der beiden Verbindungsmittel des jeweiligen Verbindungselements sind dadurch nur ein einziger Durchbruch im Laderaumschutz und ein einziger Verbinder erforderlich. Außerdem ermöglicht die Verbindung der beiden Verbindungsmittel des jeweiligen Verbindungselements eine gemeinsame Befestigung beider Verbindungsmittel des jeweiligen Verbindungselements auf und unter dem Laderaumschutz.

Bevorzugt ist es außerdem vorgesehen, dass das mindestens eine zweite Verbindungsmittel auf der Ober- oder Unterseite des Laderaumschutzes von einer Lippe umrandet ist. Diese, vorzugsweise wallartige, Lippe kann derart ausgebildet sein, dass sie verhindert, dass beispielsweise eine Flüssigkeit oder sonstiger Schmutz von dem Laderaumschutz in Kontakt mit dem zweiten Verbindungsmittel tritt und so eventuell die Funktion von selbigen beeinträchtigt.

Darüber hinaus kann es vorgesehen sein, dass das mindestens eine erste Verbindungsmittel auf der Unterseite des Laderaumschutzes in eine, vorzugsweise runde, Aufnahme aufnehmbar ist. Durch diese Aufnahme besteht zwischen dem ersten Verbindungsmittel und der Unterseite des Laderaumschutzes lediglich ein geringer oder sogar gar kein Absatz. Durch diesen Angleich des ersten Verbindungsmittels zur Ebene der Unterseite des Laderaumschutzes kann eine besonders ebene Oberfläche des Laderaumschutzes geschaffen werden.

Zusätzlich kann es außerdem vorgesehen sein, dass das erste Verbindungsmittel am Boden des Laderaumschutzes derart dimensioniert ist, dass die Kraft zum Lösen dieses ersten Verbindungsmittels von dem entsprechenden Gegenstück größer ist als die Kraft zum Lösen des zweiten Verbindungsmittels im Laderaumschutz von dem korrespondierenden Gegenstück. Wenn demnach eine Person das zweite Verbindungsmittel zwischen der Einlage bzw. Matte und dem Laderaumschutz durch Ziehen löst, löst sich dieses zweite Verbindungsmittel vor dem ersten Verbindungsmittel, d. h. die Verbindung zwischen dem Laderaumschutz und dem Ladeboden.

Ein bevorzugtes Ausführungsbeispiel der erfindungsgemäßen Vorrichtung wird nachfolgend anhand der Zeichnung näher erläutert. In dieser zeigen:
- Fig. 1: eine Sicht auf die Vorrichtung mit einem Laderaumschutz und einer Einlage,
- Fig. 2: eine Schnittdarstellung durch den Laderaumschutz und die Einlage,
- Fig. 3: eine vergrößerte Darstellung des in Fig. 2 dargestellten Schnitts, und
- Fig. 4: einen weiter vergrößerten Schnitt der Fig. 3 ohne die Einlage.

Das hier gezeigte erfindungsgemäße Ausführungsbeispiel der Vorrichtung dient zum Schutz eines Ladebereichs 23, insbesondere eines Kofferraums von Automobilen, wie insbesondere Limousinen, Kombis, Vans oder SUVs.

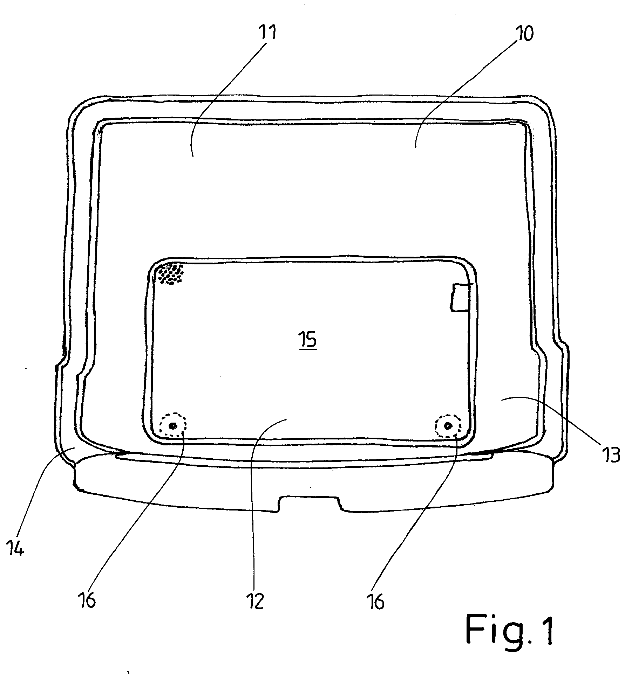

Die in Fig. 1 gezeigte Vorrichtung verfügt über einen Laderaumschutz 10, der im Laderaum eines Automobils angeordnet ist und dort einen Laderaumboden überdeckt. Bei der hier gezeigten Vorrichtung ist der Laderaumschutz 10 als eine wannenähnliche Auskleidung des Laderaums ausgebildet. Der Laderaumschutz 10 verfügt über eine Bodenwandung 11 und einen den Rand desselben umlaufend umgebenden, hochstehenden Kragen 14. Die Bodenwandung 11 des Laderaumschutzes 10 ist derart an die Form, insbesondere die Grundfläche, des Laderaumbodens angepasst, dass dieser von der Bodenwandung 11 des Laderaumschutzes 10 vollständig überdeckt wird. Der umlaufende Kragen 14 ist hier verhältnismäßig niedrig ausgebildet, kann jedoch auch wesentlich höher ausgebildet sein.

Der Laderaumschutz 10 kann aber auch als eine ebenflächige Matte ausgebildet sind, wobei die Grundfläche der Matte derjenigen der Bodenwandung 11 des hier gezeigten Laderaumschutzes 10 entspricht, aber von keinem Kragen 14 umgeben ist.

Bei dem hier dargestellten Ausführungsbeispiel verfügt die Vorrichtung über eine Einlage 12, die als zusätzlicher Schutz dient. Diese Einlage 12 ist aus einer flexiblen Matte gebildet, die lösbar mit einem in Fahrtrichtung des Automobils gesehen hinteren Bereich 13 des Laderaumschutzes 10 verbindbar ist. Die Einlage 12 kann eine besonders rutschsichere Oberfläche 15 aufweisen, sodass Gegenstände, die auf der Einlage 12 abgesetzt werden, insbesondere während der Fahrt, rutschsicher lagerbar sind. Die Einlage 12 kann ebenfalls als Wanne ausgebildet sein, sodass auch hier gegenüber dem Laderaumschutz 10 ein Schutz ausbildbar ist.

Die in Fig. 1 dargestellte Einlage 12 und der Laderaumschutz 10 sind über zwei Verbindungselemente 16 miteinander verbunden. Diese Verbindungselemente 16 sind dem hinteren Bereich 13 des Laderaumschutzes 10 fest zugeordnet. Durch diese Verbindungselemente 16 ist eine lösbare Verbindung zwischen dem Ladebereich des Automobils und dem Laderaumschutz 10 einerseits sowie dem Laderaumschutz 10 der Einlage 12 andererseits herstellbar.

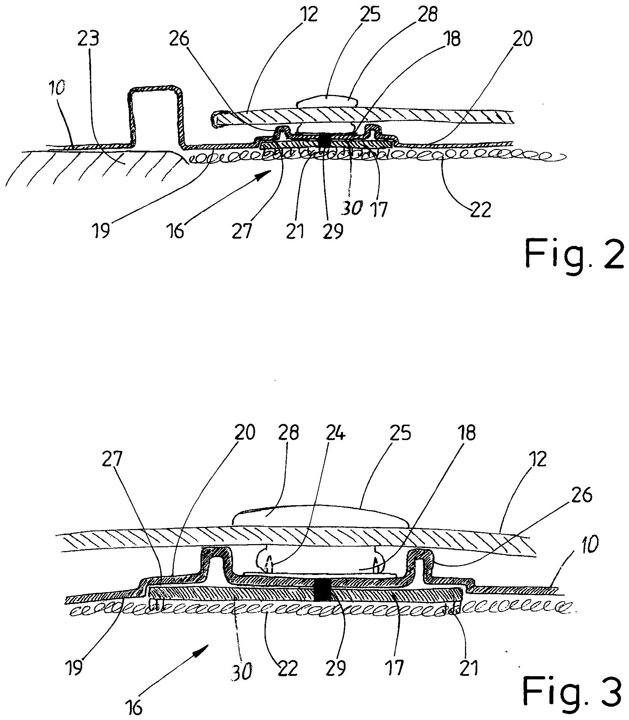

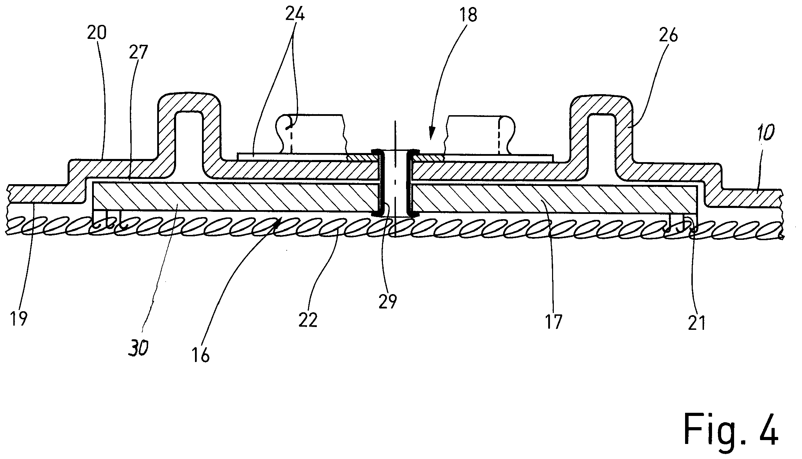

Den Fig. 2 bis 4 ist zu entnehmen, dass sich die Verbindungselemente 16 durch den Laderaumschutz 10, insbesondere eine Durchgangsbohrung (Fig. 4) oder einen sonstigen Durchlass im Laderaumschutz 10, erstrecken. Jedes Verbindungselement 16 weist ein erstes Verbindungsmittel 17 und ein zweites Verbindungsmittel 18 auf. Das jeweilige erste Verbindungsmittel 17 ist mit dem dazugehörenden zweiten Verbindungsmittel 18 fest und dauerhaft verbunden, und zwar durch einen Verbinder 29, der im gezeigten Ausführungsbeispiel als eine Hohlniet oder dergleichen ausgebildet (Fig. 4). Der Verbinder 29 für die beiden Verbindungsmittel 17 und 18 jedes Verbindungselements 16 erstreckt sich durch die dafür vorgesehene, korrespondierende Durchgangsbohrung in der Bodenwandung 11 des Laderaumschutzes 10 hindurch. Auf diese Weise ist das zweite Verbindungsmittel 18 mit dem ersten Verbindungsmittel 17 zusammengenietet, um eine Einheit zu bilden. Es ist auch denkbar, dass die beiden Verbindungsmittel 17, 18 auf eine andere Art und Weise eine Einheit bilden.

Während das erste Verbindungsmittel 17 einer Unterseite 19 des Laderaumschutzes zugeordnet ist, befindet sich das zweite Verbindungsmittel 18 auf einer Oberseite 20 des Laderaumschutzes 10. Somit bieten die Verbindungsmittel 17, 18 auf beiden Seiten 19, 20 der Bodenwandung 11 des Laderaumschutzes 10 die Möglichkeit, eine Verbindung herzustellen, und zwar einerseits mit dem Ladebereich 23 im Laderaum des jeweiligen Automobils und andererseits mit der mattenartigen Einlage 12.

Das erste Verbindungsmittel 17 ist als Haftverbindung, vorzugsweise Klettverbindung, ausgestaltet. Das in den Fig. 2 bis 4 dargestellte Ausführungsbeispiel des ersten Verbindungsmittels 17 weist eine Mikrohakenstruktur 21 auf. Diese Mikrohakenstruktur 21 ist Bestandteil des ersten Verbindungsmittels 17. Zusammen mit einer Schlaufenstruktur 22 des Ladebereichs 23 bildet die Mikrohakenstruktur 21 die Klettverbindung zwischen dem Laderaumschutz 10 und dem Ladebereich 23. Durch Ablegen des Laderaumschutzes 10 auf dem Ladebereich 23 stellt die Mikrohakenstruktur 21 des ersten Verbindungsmittels 17 eine lösbare Verbindung mit der textilen Oberfläche bzw. Schlaufenstruktur 22 des Ladebereichs 23 her.

Mit dem ersten Verbindungsmittel 17 verbunden ist das zweite Verbindungsmittel 18 auf der Oberseite 20 des Laderaumschutzes 10. Dieses zweite Verbindungsmittel 18 ist in dem in den Fig. 2 bis 4 dargestellten Ausführungsbeispiel als Schnappverbindung ausgebildet bzw. von zwei Druckknopfelementen 24 und 25 gebildet. Das Druckknopfelement 24 des zweiten Verbindungsmittels 18 ist über den Verbinder 29, also im gezeigten Ausführungsbeispiel mittels der Hohlniet, mit der Mikrohakenstruktur 21 des ersten Verbindungsmittels 17 vernietet. Dieses Druckknopfelement 24 korrespondiert mit dem mit der Einlage 12 verbundenen Druckknopfelement 25. Zum lösbaren Befestigen der Einlage 12 auf dem Laderaumschutz 10 sind die beiden Druckknopfelemente 24 und 25 des zweiten Verbindungsmittels 28 durch Zusammendrücken lösbar miteinander verbindbar, beispielsweise verrastbar.

Die Druckknopfelemente 24 und 25 bzw. das zweite Verbindungsmittel 18 sind derart ausgebildet, dass die Kraft, die benötigt wird, um die Druckknopfelemente 24 und 25 voneinander zu lösen, geringer ist, als die Kraft die nötig ist, um die Mikrohakenstruktur 21 von der Schlaufenstruktur 22 zu trennen, also das erste Verbindungsmittel 17 zu lösen. Dadurch wird gewährleistet, dass dann, wenn eine Person an der Einlage 12 zieht, zunächst das zweite Verbindungsmittel 18 gelöst wird und erst dann das erste Verbindungsmittel 17 zwischen dem Laderaumschutz 10 und dem Ladebereich 23 getrennt wird. Dadurch lassen sich sowohl die Einlage 12 von dem Laderaumschutz 10 als auch der Laderaumschutz 10 von dem Ladebereich 23 einhändig und somit auf eine einfache Art und Weise von einer Person gezielt nacheinander lösen.

Das in den Fig. 2 bis 4 dargestellte Druckknopfelement 24 auf der Oberseite 20 des Laderaumschutzes 10 weist eine lippenartige Umrandung 26 auf. Diese umlaufende Umrandung 26 stellt eine Art Deich des zweiten Verbindungsmittels 18 dar. Die Umrandung 26 dichtet die Bodenwandung 11 des Laderaumschutzes 10 trotz der für jeden Verbinder 29 in der Bodenwandung 11 vorgesehenen Durchgangsbohrung gegen beispielsweise Flüssigkeiten im Laderaumschutz 10 ab (Fig. 4). Außerdem kann diese Umrandung 26 dazu dienen, das Druckknopfelement 24 des Laderaumschutzes 10 zum Verbinden der Einlage 12 mit dem Laderaumschutz 12 schneller und einfacher aufzufinden.

Eine die Mikrohakenstruktur 21 des ersten Verbindungsmittels 17 tragende Platte 30 befindet sich bei dem in den Fig. 2 bis 4 dargestellten Ausführungsbeispiel in einer muldenartigen Aufnahme 27 in der Bodenwandung 11 des Laderaumschutzes 10. Die Platte 30 der Mikrohakenstruktur 21 ist derart in der Aufnahme 27 durch den vorzugsweise als Hohlniet ausgebildeten Verbinder 29 befestigt, dass die Platte 30 nahezu vollständig in der Aufnahme 27 unterbringbar ist und nur die Mikrohakenstruktur 21 unter der Platte 30 gegenüber der Unterseite 19 der Bodenwandung 11 des Laderaumschutzes 11 nach unten vorsteht. Dadurch wird eine ebene Auflage und Abstützung der Mikrohakenstruktur 21 geschaffen, wodurch diese vollflächig mit der Schlaufenstruktur 22 des Ladebereichs 23 zur Anlage bringbar ist.

Die Aufnahme 27 sowie die Mikrohakenstruktur 21 sind kreisartig ausgebildet (Fig. 1). Es sind auch andere Grundflächen für die Aufnahme 27 und die Mikrohakenstruktur 21 denkbar, beispielsweise rechteckige.

Das mit der Einlage 12 verbundene Druckknopfelement 25 des zweiten Verbindungsmittels 18 erstreckt sich durch die Einlage 12 und weist neben einer dem Druckknopfelement 24 zugerichteten Aufnahme, die gegenüber der Unterseite der Einlage 12 nach unten zum Druckknopfelement 24 vorsteht, auf einer gegenüberliegenden Oberseite der Einlage 12 eine Kappe 28 auf. Es ist jedoch auch denkbar, dass das Druckknopfelement 25 lediglich einer Seite der Einlage 12 zugeordnet ist und die gegenüberliegende Seite der Einlage 12 vollkommen eben ist.

Neben dem in der Fig. 1 dargestelltem Ausführungsbeispiel ist es ebenso denkbar, dass dem Laderaumschutz 10 bzw. der Einlage 12 mehr als zwei gleichermaßen ausgebildete Verbindungselemente 16 zugeordnet sind, beispielsweise in allen Eckbereichen. Dadurch lassen sich je nach Anforderung an den Laderaumschutz 10 bzw. an die Einlage 12 unterschiedlich starke Verbindungen zwischen den genannten Bestandteilen herstellen.

### Bezugszeichenliste:

- 10: Laderaumschutz
- 11: Bodenwandung
- 12: Einlage
- 13: hinterer Bereich
- 14: Kragen
- 15: Oberfläche
- 16: Verbindungselement
- 17: erstes Verbindungsmittel
- 18: zweites Verbindungsmittel
- 19: Unterseite
- 20: Oberseite
- 21: Mikrohakenstruktur
- 22: Schlaufenstruktur
- 23: Ladebereich
- 24: Druckknopfelement
- 25: Druckknopfelement
- 26: Umrandung
- 27: Aufnahme
- 28: Kappe
- 29: Verbinder
- 30: Platte

## Patentansprüche

1. Vorrichtung zum Schutz des Ladebereichs (23) von Automobilen mit einem Laderaumschutz (10), **dadurch gekennzeichnet, dass** der Laderaumschutz (10) mindestens ein Verbindungselement (16) mit zwei Verbindungsmitteln (17, 18) aufweist.

2. Vorrichtung nach Anspruch 1, **dadurch gekennzeichnet, dass** das Verbindungselement (16) oder jedes Verbindungselement (16) ein erstes Verbindungsmittel (17) und ein zweites Verbindungsmittel (18) aufweist, wobei das erste Verbindungsmittel (17) einer Unterseite (19) des Laderaumschutzes (10) und das zweite Verbindungsmittel (18) einer Oberseite (20) des Laderaumschutzes (10) zugeordnet ist.

3. Vorrichtung nach Anspruch 1 oder 2, **dadurch gekennzeichnet, dass** das erste und das zweite Verbindungsmittel (17, 18) unterschiedlich ausgebildet sind, wobei eines der Verbindungsmittel (17, 18) als Haftverbindung und das andere Verbindungsmittel (17, 18) als Schnappverbindung ausgebildet ist.

4. Vorrichtung nach einem der vorhergehenden Ansprüche, **dadurch gekennzeichnet, dass** das erste Verbindungsmittel (17) als Klettverschlussverbindung, insbesondere als Mikrohakenstruktur (21) oder Schlaufenstruktur (22), ausgebildet ist und einer korrespondierenden Klettverschlussverbindung auf dem Ladebereich (23) zuordbar ist und das zweite Verbindungsmittel (18) als Druckknopfelement (24, 25) ausgebildet ist und einem korrespondierenden Druckknopfelement (24, 25) einer Einlage (12), vorzugsweise einer Matte, zuordbar ist.

5. Vorrichtung nach Anspruch 4, **dadurch gekennzeichnet, dass** die Einlage (12) wenigstens größtenteils, insbesondere ausschließlich, innerhalb des, vorzugsweise wannenartigen, Laderaumschutzes (10) angeordnet ist.

6. Vorrichtung nach einem der vorhergehenden Ansprüche, **dadurch gekennzeichnet, dass** der Laderaumschutz (10) zwei Verbindungselemente (16) aufweist, die einem in Fahrtrichtung des Automobiles betrachtet hinterem Bereich des Laderaumschutzes (10) zugeordnet sind, vorzugsweise dass der Laderaumschutz (10) jeweils ein Verbindungselement (16) in einem der vier Eckbereiche des Laderaumschutzes (10) zugeordnet ist.

7. Vorrichtung nach einem der vorhergehenden Ansprüche, **dadurch gekennzeichnet, dass** das erste Verbindungsmittel (17) und das zweite Verbindungsmittel (18) miteinander verbunden sind.

8. Vorrichtung nach Anspruch 7, **dadurch gekennzeichnet, dass** die Verbindung des ersten Verbindungsmittels (17) und des zweiten Verbindungsmittels (18) durch einen gemeinsamen Verbinder erfolgt, der sich durch einen Durchbruch im Laderaumschutz (10) erstreckt.

9. Vorrichtung nach einem der vorhergehenden Ansprüche, **dadurch gekennzeichnet, dass** die Verbindungsmittel (17, 18) jeweils wenigstens nahezu in der gleichen Ebene liegen wie die Oberseite (20) und die Unterseite (19) des Laderaumschutzes (10).

10. Vorrichtung nach einem der vorhergehenden Ansprüche, **dadurch gekennzeichnet, dass** das mindestens eine erste Verbindungsmittel (17) auf der Unterseite (19) des Laderaumschutzes (10) in einer, vorzugsweisen runden, Aufnahme (27) aufnehmbar ist, und das mindestens eine zweite Verbindungsmittel (18) auf der Oberseite (20) des Laderaumschutzes (10) von einer Lippe umrandet ist.

11. Vorrichtung nach einem der vorhergehenden Ansprüche, **dadurch gekennzeichnet, dass** das erste Verbindungsmittel (17) derart dimensioniert ist, dass die Kraft zum Lösen des ersten Verbindungsmittels (17) größer ist als die Kraft zum Lösen des zweiten Verbindungsmittels (18).
